# EUROPÄISCHE PATENTANMELDUNG

(11) **EP 1 211 052 A1**
(43) Veröffentlichungstag der Anmeldung: **05.06.2002**
(21) Anmeldenummer: 00810992.8
(22) Anmeldetag: 26.10.2000
(51) Int. Cl.: B29C 53/56

(54) **Verfahren und Vorrichtung zum Bandagieren von Körpern mit faserverstärkten Kunststoffbändern**

(71) Anmelder: ABB RESEARCH LTD., 8050 Zürich (CH)
(72) Erfinder: Aglen, Olga, 11243 Stockholm (SE); Ahrens, Markus, 5406 Baden-Rütihof (CH); Mallick, Vishal, 5413 Birmenstorf (CH); Meier, Guido, 5303 Würenlingen (CH)
(74) Vertreter: ABB Patent Attorneys

(57) **Zusammenfassung**

Vorgestellt wird ein Verfahren und eine Vorrichtung zum Bandagieren von Körpern (30), insbesondere von Rotoren elektrischer Maschinen. Bei dem Verfahren wird ein faserverstärktes Kunststoffband (16) von einer Abwickeleinheit (14) abgespult und durch eine nachgeordnete Zuführeinheit (18) einer Aufschmelzvorrichtung (26) zugeleitet, mit deren Hilfe die Kunststoffmatrix des Bandes (16) aufgeschmolzen wird. Weiter wird das Band (16) einer Druckeinheit (28) zugeführt, von welcher es mit der aufgeschmolzenen Matrix an den zu bandagierenden Körper (30) angepresst wird. Die Abwickeleinheit (14), die Zuführeinheit (18) und die Aufschmelzvorrichtung (26) werden dabei zusammen mit der Druckeinheit (28) in die Relativbewegung gegenüber dem zu bandagierenden Körper (30) einbezogen, so dass das faserverstärkte Kunststoffband (16) von der Abwickeleinheit (14) bis zum Auftreffen auf dem zu bandagierenden Körper (30) immer eine optimale Position einnimmt.

Das Verfahren kann durch eine Vorrichtung (10) verwirklicht werden, bei dem die Abwickeleinheit, die Zuführeinheit, die Aufschmelzvorrichtung (26) und die Druckeinheit (28) in einem Applikationskopf (12) örtlich zusammengefasst sind.

## Beschreibung

### Technisches Gebiet

Die Erfindung betrifft eine Vorrichtung zum Bandagieren von Körpern mit faserverstärkten Kunststoffbändern gemäss den Merkmalen des Oberbegriffes des Patentanspruches 1 sowie eine Vorrichtung zum Bandagieren von Körpern mit faserverstärkten Kunststoffbändern gemäss den Merkmalen des Oberbegriffes des Patentanspruches 6.

Das Bandagieren von Körpern mit faserverstärkten Kunststoffbändern wird vielfältig eingesetzt, so zum Beispiel zum Bandagieren von Druckbehältern, wie Gasflaschen, zum Bandagieren von Wickelköpfen von Läufern elektrischer Maschinen, zum Bandagieren von mit Magneten besetzten schnelllaufenden Rotoren und ähnlichen Dingen. Die Qualität der Bandage hängt dabei von vielen Parametern ab, wie z.B. dem Bandagematerial, der Hitzezufuhr, der Abkühlung, gegebenenfalls der Regulierung der Vorspannung und anderen Dingen mehr.

### Stand der Technik

Aus der US-5,597,430 ist ein Verfahren und eine Vorrichtung zum Bandagieren rotierender, zylindrischer Körper mit einem faserverstärkten thermoplastischen Material bekannt, bei dem einzelne Faserstränge von einer Abwickelvorrichtung abgewickelt, via eine Rollenkombination gebündelt und über ein Rollensystem, dessen Rollen einzeln über Motoren angetrieben sind, vorgespannt werden. Anschliessend werden die Faserstränge via Spreizrollen aufgespreizt und entweder mittels Extruder oder mittels einer Doppelpresse in welche die Faserstränge und eine thermoplastische Folie eingeführt werden, mit thermoplastischem Material imprägniert. Mittels einer Anpressrolle, deren Temperatur regulierbar sein kann, wird das faserverstärkte thermoplastische Material dann auf den zu bandagierenden Körper aufgebracht. Bei diesem Verfahren können grosse Qualitätsschwankungen des thermoplastischen Materials auftreten. Ausserdem sind die Wärmeverhältnisse betreffend des Aufschmelzens des thermoplastischen Kunststoffes sowie dessen Abkühlen schwer zu kontrollieren, so dass kaum definierte Temperaturgradienten erreichbar sind. Das System zum Aufbringen der Vorspannung ist sehr kompliziert und mit den vielen Motoren raumintensiv, kostenaufwendig und wartungsanfällig.

Bei dem Verfahren und der Vorrichtung zum Bandagieren rotierender, zylindrischer Körper mit einem faserverstärkten Kunststoffband, wie sie aus DE-A-196 35 295 bekannt sind, ist durch die Verwendung von faserverstärkten thermoplastischen Kunststoffbändern die gewünschte Qualität des faserverstärkten Kunststoffmaterials in gleichmässiger Höhe einstellbar. Eine Heizvorrichtung, deren Heizelemente in Form und Anordnung an den Aussenradius des zu bandagierenden Körpers und an den Weg des faserverstärkten Kunststoffbandes unmittelbar vor dem Aufwickeln angepasst sind, ermöglicht die Einstellung gut kontrollierbarer Wärmeverhältnisse. Allerdings können mit dieser Vorrichtung nur Körper mit einem bestimmten zylindrischen Aussenradius unter optimalen Wärmverhältnissen bandagiert werden. Der Wärmeeintrag in den zu bandagierenden Körper ist bei diesem System sehr hoch. Das System zum Aufbringen der Vorspannung ist zwar sehr einfach und kostengünstig, die Vorspannung ist damit aber nur in einem begrenzten Rahmen regulierbar.

Beiden Vorrichtungen gemeinsam ist, dass generell nur rotationssymmetrische, zylindrische Körper, bandagiert werden können und die Höhe des Steigungswinkels, mit dem bandagiert wird, abhängig von den Eigenschaften (Torsions-, Knicksteifigkeit) des faserverstärkten Kunststoffmaterials bzw. Kunststoffbandes sehr begrenzt ist.

### Darstellung der Erfindung

Aufgabe der vorliegenden Erfindung ist es, eine Vorrichtung zu schaffen, mit der es kostengünstig möglich ist, sowohl zylindrische Körper unterschiedlicher Radien als auch andere Körper unter hoher Qualität der Bandage mit faserverstärkten Kunststoffbändern zu bandagieren.

Diese Aufgabe wird gelöst durch ein Verfahren gemäss den Merkmalen des Patentanspruches 1.

Ein faserverstärktes Kunststoffband wird von einer Abwickeleinheit abgespult via eine Zuführeinheit einer Aufschmelzvorrichtung und schliesslich einer Druckeinheit zugeführt. Nach dem Aufschmelzen der Kunststoffmatrix des Kunststoffbandes mittels der Aufschmelzvorrichtung wird das Kunststoffband mit Hilfe der Druckeinheit an einen zu bandagierenden Körper angepresst. Alle zum Applizieren des faserverstärkten Kunststoffbandes nötigen Elemente angefangen bei der Abwickeleinheit bis hin zur Druckeinheit werden dabei in eine Relativbewegung gegenüber dem zu bandagierenden Körper einbezogen. Auf diese Weise kann das faserverstärkte Kunststoffband von der Abwickeleinheit bis zum Auftreffen auf dem zu bandagierenden Körper immer in einer optimalen Position gehalten werden. Vermeidbare Beanspruchungen des faserverstärkten Kunststoffbandes, wie Knicken, Verdrehen und ähnliches werden dadurch vermieden.

Wird der zu bandagierende Körper mit seiner Oberfläche rotierend und/oder linear an der Druckeinheit vorbeibewegt, oder werden die Druckeinheit und die anderen zum Applizieren des faserverstärkten Kunststoffbandes notwendigen Elemente rotierend und/oder linear an der Oberfläche des zu bandagierenden Körpers vorbeigeführt, so erlaubt dies gegenüber dem Stand der Technik nicht nur eine Erweiterung der relativen Bewegungen von Druckeinheit und zu bandagierendem Körper. Das Spektrum der zu bandagierenden Körper kann dadurch ebenfalls von einfachen zylindrischen Körpern auf Körper nahezu beliebiger Form erweitert werden. Dasselbe gilt auch, wenn sich sowohl der zu bandagierende Körper als auch die zur Applikation des faserverstärkten Kunststoffbandes nötigen Elemente rotierend und/oder linear zueinander bewegen.

Für Druckbehälter, Rotoren und ähnliches ist es wichtig, dass die Bandage zumindest teilweise mit einer gewissen Vorspannung aufgebracht wird. Wird das faserverstärkte Kunststoffband in einer Zuführeinheit vorgespannt, welche mit dem Druckkopf und den anderen für die Applikation nötigen Elementen relativ zu dem zu bandagierenden Körper bewegt wird, so werden Torsionen des Bandes während des Vorspannens vermieden und Qualitätsverluste des Bandes und die Gefahr des Bandbruches während des Aufbringens der Vorspannung werden verringert.

Sehr vorteilhaft ist es, das faserverstärkte Kunststoffband nach Durchlaufen verschiedener Rollen der Zuführeinheit, wie z.B. Führungs-, Umlenk- und gegebenenfalls Vorspannrollen bzw. Bremsrollen, und vor Erreichen der Aufschmelzvorrichtung vorzuwärmen. Auf diese Weise kann die Wickelgeschwindigkeit der faserverstärkten Kunststoffbänder erhöht werden und abhängig von der Art des Eintrags der Aufschmelzenergie (Wärmestrahlung, UV-Strahlung) auch der Hitzeeintrag in den zu bandagierenden Körper verringert werden.

Durch die Überwachung des Bandagierens via Sensoren, kann eine sehr hohe Qualität der Bandage gewährleistet werden. Im Zusammenwirken mit einer Steuereinheit kann der Prozess nicht nur Überwacht sondern reguliert und automatisch gesteuert werden.

Durch das örtliche Zusammenfassen der zum Applizieren des faserverstärkten Kunststoffbandes notwendigen Elemente, nämlich Abwickeleinheit, Zuführeinheit, Aufschmelzvorrichtung und Druckeinheit in einem Applikationskopf, ist es möglich alle diese Elemente in die Relativbewegung, welche die Druckeinheit und der zu bandagierende Körper während des Bandagierens relativ zueinander ausführen, mit einzubeziehen. Dadurch können ein Verdrehen und ein Knicken des faserverstärkten Kunststoffbandes während des Bandagierens verhindert werden, was die Qualität der Bandage erhöht. Auch der Steigungswinkel, in dem das faserverstärkte Kunststoffband auf dem zu bandagierenden Körper appliziert werden kann, ist so frei wählbar, ohne dass es zu einem Verdrehen oder Knicken des Bandes kommt.

Ist eine Bewegungseinheit gemäss Anspruch 7 vorgesehen so können, sowohl zylindrische Körper als auch flächige Körper bandagiert werden.

Sind die Bewegungseinheit und der Applikationskopf translatorisch in beliebiger Richtung gegeneinander bewegbar so ist es möglich, Körper sowohl mit konkaven als auch mit konvexen Oberflächen zu bandagieren.

Sind die Bewegungseinheit und der Applikationskopf relativ zueinander um eine oder verschiedene Achsen rotierbar, so kann das faserverstärkte Kunststoffband sehr einfach in verschiedenen Richtungen auf dem zu bandagierenden Körper aufgebracht werden. Das Bandagieren komplexer Körperformen vereinfacht sich und das Spektrum der bandagierbaren Körperformen erhöht sich.

Durch die Befestigung des Applikationskopfes und/oder der Bewegungseinheit an einem Roboterarm ist die relative Bewegbarkeit der beiden Vorrichtungsbestandteile in unterschiedlichste Richtungen sehr einfach realisierbar.

Weist die Druckeinheit einen austauschbaren Druckkopf auf, so ist der Druckkopf beispielsweise auf den minimal Radius eines konkaven Bereiches eines Körpers genau abstimmbar. Wählbar sind ausserdem die Oberflächenbeschaffenheit des Druckkopfes, seine Ausgestaltung als Anpresskissen, Anpressplatte oder Anpressrolle und ob er in seiner Temperatur regulierbar ist oder nicht. Dies alles wirkt sich auf den Bandagierprozess, beispielsweise auf den Abkühlgradienten aus und beeinflusst die Beschaffenheit der Bandage, ihre Vorspannung, Rauhigkeit und ähnliches.

Besonders vorteilhaft ist es, austauschbare Anpressrollen mit verschiedenen Durchmessern als Druckkopf vorzusehen, da so eine leichte Abstimmung zwischen dem minimalen Radius eines konkaven Bereiches der Konturkurve des Körpers und dem Druckkopf möglich ist.

Sehr vorteilhaft ist es die Vorspannung mittels eines Steuereinheit permanent nachregelbar zu halten, so dass eine gleichbleibende Vorspannung gewährleistet werden kann und bei Bedarf, z.B. von einer Bandlage zur nächsten, die Vorspannung auch geändert werden kann.

Ist zum Vorspannen eine gebremste Vorspannrolle (auch Bremsrolle genannt) im Weg des faserverstärkten Kunststoffbandes, z.B. in der Zuführeinheit, vorgesehen, so ist ein besonders einfaches und kostengünstiges Vorspannen möglich. Besonders vorteilhaft ist hier eine magnetisch gebremst Rolle, da diese ein sehr sanftes, bandschonendes bremsen erlaubt. Ein weiterer Vorteil der magnetisch gebremsten Rolle ist die höhere Regelgeschwindigkeit und das vermeiden von Stick-Slip Effekten, welche bei Fliehkraft- oder Scheibenbremsen zu bandstrapazierenden Oszillationen führen.

Je nachdem ob als Kunststoffmatrix des faserverstärkten Kunststoffbandes ein Thermoplast oder ein Epoxid verwendet wird, kann als Aufschmelzvorrichtung bzw. Aushärtevorrichtung eine Heizelement oder eine UV-Lampe vorgesehen sein.

Ist innerhalb des Applikationskopfes die Aufschmelzvorrichtung gegenüber der Druckeinheit beweglich angeordnet so kann die Wärmestrahlung bzw. UV-Strahlung immer im optimalen Winkel in das faserverstärkte Kunststoffband eingebracht werden.

Ist der Aufschmelzvorrichtung eine Vorwärmvorrichtung vorgeschaltet, so kann der Bandagierprozess beschleunigt und der Wärmeeintrag in den zu bandagierenden Körper verringert werden.

Weitere bevorzugte Ausführungsformen gehen aus den weiteren abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Fig. 1: einen Ausschnitt einer ersten Ausführungsform der erfindungsgemässen Vorrichtung;
- Fig. 2: vergrössert eine Ausführungsform des Applikationskopfes der erfindungsgemässen Vorrichtung;
- Fig. 3: einen Ausschnitt einer zweiten Ausführungsform der erfindungsgemässen Vorrichtung; und
- Fig. 4: einen Ausschnitt einer dritten Ausführungsform der erfindungsgemässen Vorrichtung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

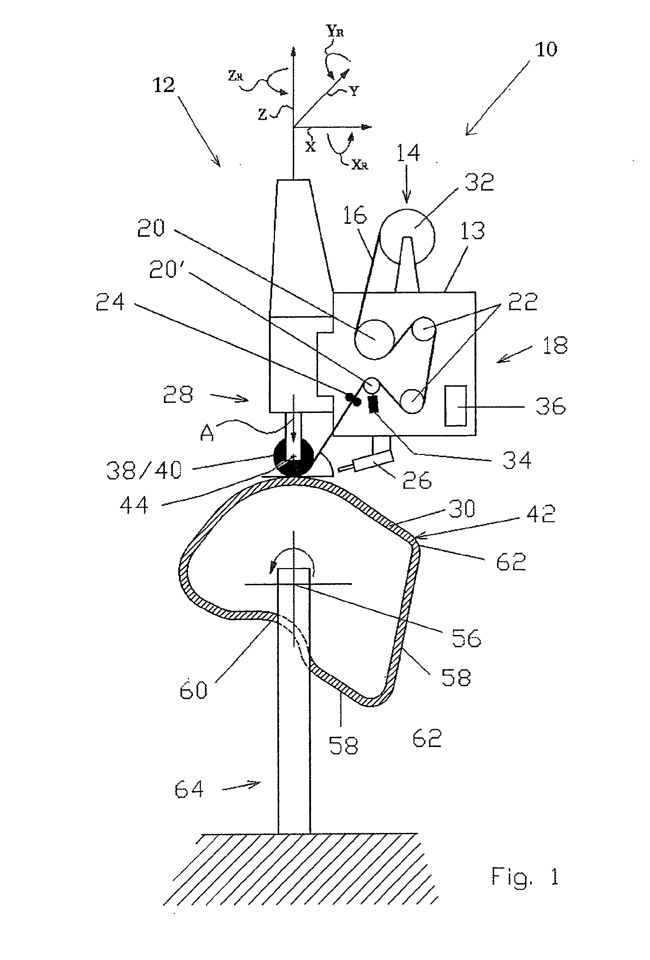

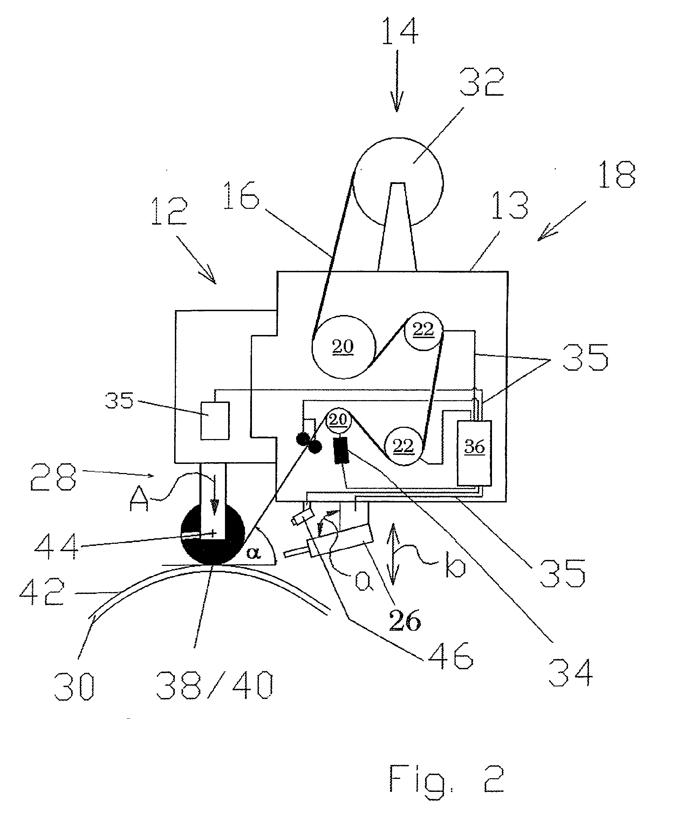

Die Figuren 1 bis 4 zeigen Ausschnitte verschiedener Ausführungsformen der erfindungsgemässen Vorrichtung 10, wobei in Fig. 2 zwecks besserer Erkennbarkeit ein Applikationskopf 12 der Vorrichtung 10 vergrössert dargestellt ist. In den Fig. 1 bis 4 sind im Applikationskopf 12 jeweils die für die Applikation eines faserverstärkten Kunststoffbandes 16 notwendigen Elemente 14, 18, 26, 28 zusammengefasst. Diese Elemente sind: eine Abwickeleinheit 14 zum Abwickeln des faserverstärkten Kunststoffbandes 16, dieser nachgeordnet eine Zuführeinheit 18, mit verschiedenen Umlenkrollen 20, 20', Bremsrollen 22 und Antriebsrollen 24, daran anschliessend eine Aufschmelz- bzw. Aushärtevorrichtung 26 zum Aufschmelzen bzw. Aushärten der Kunststoffmatrix des faserverstärkten Kunststoffbandes 16 und eine Druckeinheit 28, welche zum Andrücken des faserverstärkten Kunststoffbandes 16 an einen zu bandagierenden Körper 30 dient.

Durch das Zusammenfassen der für die Applikation des Kunststoffbandes 16 notwendigen Elemente 14, 18, 26, 28 in einem Applikationskopf 12 ist es möglich die Druckeinheit 28 und den zu bandagierenden Körper 30 in beliebigen Richtungen relativ zueinander zu bewegen, ohne dass dies zu Komplikationen mit der Führung des faserverstärkten Kunststoffbandes 16, wie zu Knicken oder Verdrehen des Bandes 16, führt. Statt nur die Druckeinheit 28 relativ zu dem zu bandagierenden Körper 30 zu bewegen, kann nun der ganze Applikationskopf 12 beliebig bewegt werden, wie dies in Fig. 1 durch die Pfeile X, Y, Z, X_{R}, Y_{R}, Z_{R} angedeutet ist. Auf diese Weise ist nicht nur eine translatorische Bewegung in Z- und Y-Richtung eines kartesischen Koordinatensystems möglich, wie dies bisher schon üblich war, sondern auch eine translatorische Bewegung in X- Richtung sowie Rotationsbewegungen X_{R}, Y_{R}, Z_{R}, um die Achsen X, Y, Z des kartesischen Koordinatensystems. Durch diese Beweglichkeit ist es möglich, Körper 30 nahezu beliebiger Kontur - geradflächig, konkav, konvex - zu bandagieren, wie dies in den Fig.1, 3 und 4 angedeutet ist. Der Einwirkwinkel des Kraftvektors (Pfeil A) beim Andrücken des Bandes 16 an den Körper 30 und der Zuführwinkel α, unter dem das Band 16 der Druckeinheit 28 zugeführt wird, können durch diese Beweglichkeit immer nahezu optimal gehalten werden.

Im Folgenden wird der Applikationskopf 12 und die in ihm zusammengefassten Elemente 14, 18, 26, 28 näher beschrieben: Die Abwickeleinheit 14 ist auf einem Gehäuse 13 des Applikationskopfes 12 angeordnet, das unter anderem die Zuführeinheit 18 beherbergt. Die Abwickeleinheit 14 umfasst eine drehbar gelagerte Trommel 32, auf der das faserverstärkte Kunststoffband 16 aufgewickelt ist. Die Trommel 32 kann angetrieben sein, ist es aber in den gezeigten Beispielen nicht. Statt der angetriebenen Trommel 32, weist die Zuführeinheit 18 je ein Paar Antriebsrollen 24 auf, welche das faserverstärkte Kunststoffband 16 über Umlenkrollen 20, 20' und in den gezeigten Beispielen über je zwei Bremsrollen 22 von der Trommel 32 abziehen. Die Bremsrollen 22 werden eingesetzt, wenn das faserverstärkte Kunststoffband 16 mit Vorspannung auf den zu bandagierende Körper 30 aufgebracht werden soll. Sie haben selber keinen Antrieb, was Platz spart und die Wartung vereinfacht. Die Bremsrollen 22 sind magnetisch gebremst, was ein sehr sanftes Bremsen erlaubt. Die Belastung des faserverstärkten Kunststoffbandes 16 wird dadurch sehr gering gehalten und die Gefahr von Bandbrüchen entsprechend vermindert. An einer der Umlenkrollen 20' ist ein Kraftmesser 34 angeordnet. Mittels des Kraftmessers 34 ist die tatsächliche Vorspannung ermittelbar und mit Hilfe einer programmierbaren Steuereinheit 36 sind abhängig von dieser tatsächlichen Vorspannung die Antriebsrollen 24 und die Bremsrollen 22 so steuerbar, dass das faserverstärkte Kunststoffband 16 mit einer gewünschten, konstanten oder auch einer definierten variablen Vorspannung auf den zu bandagierenden Körper 30 aufgebracht werden kann. Der Kraftmesser 34 kann zugleich auch als Bandbruchsensor verwendet werden. Freilich kann statt des Kraftmessers 34 auch eine Lichtschranke als Bandbruchsensor in der Zuführeinheit 18 vorgesehen sein. Beispielhaft für alle Ausführungsformen sind in Fig. 2 der Kraftmesser 34, die Steuereinheit 36 sowie die Verbindungen 35 zwischen den für die Steuerung der Vorspannung wichtigen Elementen 34, 36, 24, 22 gezeigt.

Das faserverstärkte Kunststoffband 16 ist durch eine Öffnung (nicht explizit dargestellt) aus dem Gehäuse 13 des Applikationskopfes 12 heraus und einem Druckkopf 38 der Druckeinheit 28 zugeführt. Der Druckkopf 38 ist auswechselbar und kann verschiedene Formen haben. Er kann beispielsweise als Anpresskissen, Anpressplatte oder Anpressrolle 40 ausgestaltet sein. In den gezeigten Beispielen sind austauschbare Anpressrollen 40 verschiedenen Durchmessers als Druckkopf 38 vorgesehen. Ihr Durchmesser ist jeweils abgestimmt auf den kleinsten Radius aller konkaven Konturen der Oberfläche 42 des zu bandagierenden Körpers 30 gewählt. Die Drehachse 44 der eingesetzten Anpressrolle 40 ist annähernd senkrecht zum Kraftvektor (Pfeil A) der aufzubringenden Anpresskraft angeordnet. Mittels eines Sensors 37, wie er in Fig. 2 schematisch dargestellt ist, und der Steuereinheit 36 ist die Anpresskraft in ihrer Stärke einstellbar. Als Anpressrollen 40 können gegebenenfalls auch angetriebene und/oder in ihrer Temperatur regulierbare Anpressrollen 40 vorgesehen sein.

Am Gehäuse 13 des Applikationskopfes 12 ist benachbart zum Druckkopf 38 und diesem gegenüber beweglich die Aufschmelzvorrichtung 26 angeordnet. Die Beweglichkeit der Aufschmelzvorrichtung 26 ist durch die Pfeile a, b in Fig. 2 angedeutet. DieAufschmelz- bzw. Aushärtevorrichtung 26 ist derart angeordnet, dass zwischen ihr und dem Druckkopf 38 das faserverstärkte Kunststoffband 16 aus dem Gehäuse 13 des Applikationskopfes 12 heraus und dem Druckkopf 38 zugeführt ist. Durch diese Anordnung kann die Kunststoffmatrix des faserverstärkten Kunststoffbandes 16 zumindest auf der dem Körper 30 zugewandten Seite angeschmolzen und für die Applikation auf dem Körper 30 vorbereitet werden. Die Beweglichkeit der Aufschmelzvorrichtung 26 gegenüber dem Druckkopf 38 ermöglicht unabhängig von der Kontur des Körpers (geradflächig, konkav, konvex) immer das bestmögliche Einbringen der Aufschmelzenergie. Abhängig von der Art der Kunststoffmatrix des faserverstärkten Kunststoffbandes 16 ist eine Aushärtevorrichtung 26, beispielsweise in Form einer UV-Lampe für Bänder 16 mit Epoxidmatrix oder ein eine Aufschmelzvorrichtung 26 in Form eines Heizelements, z.B. eines Gasbrenners, für Bänder 16 mit einer thermoplastischen Matrix vorgesehen. Zur Überwachung der Bandtemperatur kann am Applikationskopf 12 ein Temperatursensor 46, am besten ein Pyrometer, angeordnet sein. Ist dieser via die Steuereinheit mit der Aufschmelz- bzw. Aushärtevorrichtung 26 verbunden, wie dies in Fig. 2 dargestellt ist, kann die Bandtemperatur automatisch immer auf dem gewünschten Wert gehalten werden.

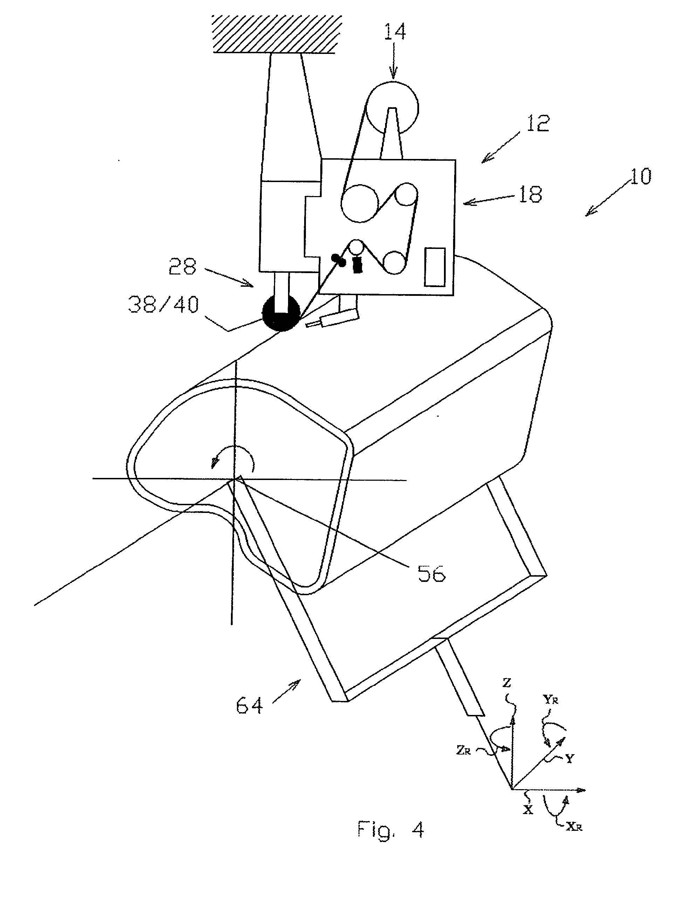

Um ein automatisches Einführen des faserverstärkten Kunststoffbandes 16 unter den Druckkopf 38 zu ermöglichen, kann den Antriebsrollen 24 nachgeordnet eine Zuführhilfe 48 vorgesehen sein, wie sie in Form von zwei parallelen Platten in Fig. 4 gezeigt ist. Bei Verwendung thermoplastischer Bänder 16 kann die Zuführhilfe 48 zugleich als Vorwärmvorrichtung 50 ausgestaltet sein, indem die Platten entweder Heizschlangen beinhalten oder in Form von Glasplatten IR-Lampen abdecken.

Auch der Temperatureintrag in den zu bandagierenden Körper 30 kann mittels eines weiteren, auf der der Zuführeinheit 18 gegenüberliegenden Seite am Gehäuse 13 des Applikationskopfes 12 angeordneten Temperatursensors 52 ermittelt werden. Zusammen mit einem ebenfalls dort am Gehäuse 13 des Applikationskopfes 12 angeordneten Kühleinheit 54 und mit Hilfe der Steuereinheit 36 kann der zu bandagierende Körper 30 gezielt gekühlt werden. In Fig. 4 sind als weiterer Temperatursensor 52 ein Pyrometer und als Kühleinheit 54 ein Druckluftgebläse dargestellt.

Wie bereits erwähnt, können mit Hilfe der erfindungsgemässen Vorrichtung 10 Körper 30 mit den verschiedensten Konturen bandagiert werden. In Fig. 1 ist ein zu bandagierende Körper 30 mit einer Rotationsachse 56 dargestellt, der eine Kontur mit geradflächigen 58, konkaven 60 und konvexen 62 Abschnitten aufweist. Der Körper 30 ist auf einer nicht näher dargestellten Bewegungseinheit 64 angeordnet, die den Körper 30 um die Rotationsachse 56 dreht und so die Oberfläche 42 des zu bandagierenden Körpers 30 am Druckkopf 38 vorbeibewegt. Über den Kraftmesser 34 und die Steuereinheit 36 wird der Druckkopf 38 immer im Kontakt mit der Oberfläche 42 des zu bandagierenden Körpers 30 gehalten und der Applikationskopf 12 der Kontur nachgeführt. Der Steigungswinkel, mit der das faserverstärkte Kunststoffband 16 auf den Körper 30 aufgewickelt wird, ist frei wählbar und ebenso die Vorspannung. Mit der programmierbaren Steuereinheit 36 kann beispielsweise die erste Bandlage mit einem Steigungswinkel von fast 90°, d.h. nahezu parallel zur Rotationsachse 56, und ohne Vorspannung auf den Körper 30 aufgebracht werden, die zwei folgenden Bandlagen können dagegen mit Vorspannung und mit gegenläufigen Steigungswinkeln von +20° und -20° aufgebracht werden.

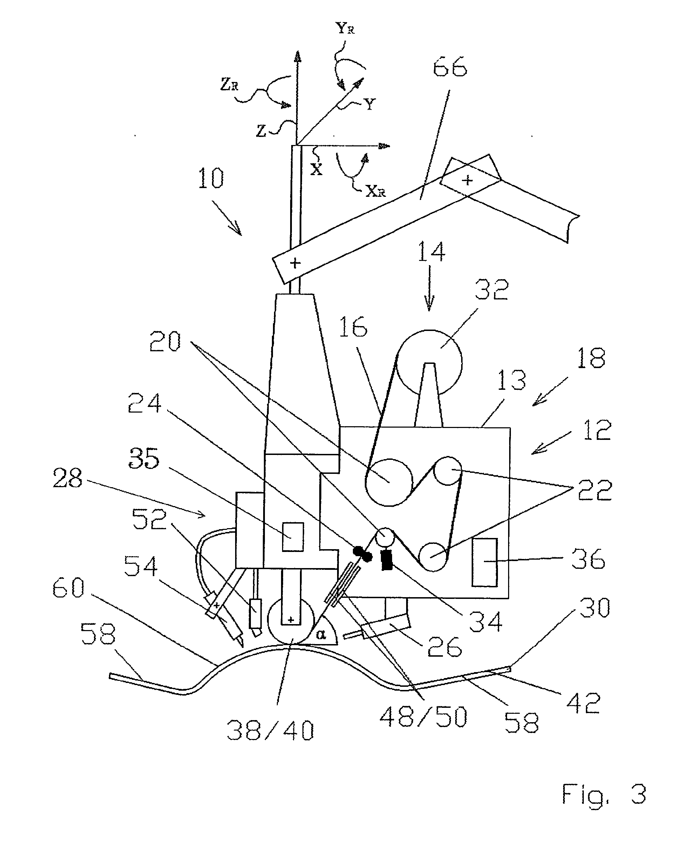

Die Bewegungseinheit 64 lässt sich in etwas modifizierter Form auch für einen flächigen Körper 30, wie er beispielsweise in Fig. 3 dargestellt ist, verwenden. Die Bewegungseinheit 64 könnte zu diesem Zweck z.B. mit Greifern zum festhalten des flächigen Körpers ausgestattet werden. Aber es sind auch andere Bewegungseinheiten 64 denkbar, wenn der flächige Körper 30 beispielsweise nur auf einer Seite mit dem faserverstärkte Kunststoffband 16 beschichtet werden soll. Dann können z.B. Transportbänder oder Transporttische, die den flächigen Körper 30 in einer Ebene am Druckkopf 38 vorbeibewegen, zum Einsatz kommen. Die Beweglichkeit des Applikationskopfes 12 kann am einfachsten realisiert werden indem er mit einem Roboterarm 66 verbunden wird, wie dies in Fig. 3 für den Applikationskopf 12 angedeutet ist. Eine andere Möglichkeit diese Beweglichkeit herzustellen, besteht darin den Applikationskopf 12 in einem portalartigen Gestell beispielsweise auf Schienen bewegbar und mittels entsprechender Gelenke drehbar zu lagern.

Wie Fig. 4 zeigt, ist es auch denkbar den Applikationskopfes 12 fix zu installieren und die Bewegungseinheit 64 so auszugestalten, dass sie den zu bandagierenden Körper 30 in sieben Richtungen bewegen kann: um die Rotationsachse 56, translatorisch entlang der Achsen X, Y, Z und rotierend um diese Achsen (Pfeile X_{R}, Y_{R}, Z_{R}). Auch hier ist es am einfachsten die Bewegungseinheit 64 mit einem Roboterarm zu verbinden (nicht dargestellt).

Nicht bildlich dargestellt ist die Möglichkeit sowohl die Bewegungseinheit 64 als auch den Applikationskopf 12 mit einem Roboterarm 66 zu verbinden oder durch sonstige Mittel frei bewegbar auszugestalten.

Anhand Fig. 1 wird nun kurz das Verfahren beschrieben: Der zu bandagierende Körper 30 soll mit einem thermoplastischen, faserverstärkten Kunststoffband 16 bandagiert werden.

Der Applikationskopf 12 ist daher mit einer Aufschmelzvorrichtung 26 ausgetattet. Der zu bandagierende Körper 30 wird auf einer Bewegungseinheit 64 so befestigt, dass er angetrieben von der Bewegungseinheit 64 um seine Rotationsachse 56 drehbar ist. Um den zu bandagierende Körper 30 mit einem Steigungswinkel von beispielsweise 50° zu bandagieren, wird der gesamte Applikationskopf 12 um die Z-Achse soweit gedreht, dass zwischen der Rotationsachse 56 des Körpers 30 und der Achse 44 der Anpressrolle 40 ein 50° Winkel entsteht. Das faserverstärkte Kunststoffband 16 wird dann von der Trommel 32 der Abwikkeleinheit 14 durch eine nicht genauer dargestellte Öffnung in das Gehäuse 13 des Applikationskopfes 12 eingeführt. Über die Umlenkrollen 20, 20' und die Bremsrollen 22 wird das Band 16 zwischen den Antriebsrollen 24 der Zuführeinheit 18 hindurch und aus dem Gehäuse 13 wieder heraus dem Druckkopf 38 der Druckeinheit 28 zugeführt. Die thermoplastische Kunststoffmatrix des faserverstärkten Kunststoffbandes 16 wird durch den Gasbrenner 26 auf der dem Körper zugewandten Seite aufgeschmolzen und anschliessend durch den Druckkopf 38 an den Köper 30 angedrückt.. Der Körper 30 wird, angetrieben von der Bewegungseinheit 64, um seine Rotationsachse 56 gedreht, so dass sich die Oberfläche 42 des zu bandagierenden Körpers 30 am Druckkopf 38 rotierend vorbeibewegt. Während das Band 16 mit Hilfe der Antriebsrollen 24 und mittels des Druckkopf 38 von der Trommel 32 der Abwickeleinheit 14 abgezogen wird, bewegt sich der Applikationskopf 12 translatorisch in Y-Richtung. Um das faserverstärkte Kunststoffband 16 mit einer Vorspannung zu versehen werden die Bremsrollen 22 abhängig von der mittels des Kraftmessers 34 ermittelten Vorspannung magnetisch mehr oder weniger stark gebremst. Die permanente Messung des Anpressdruckes des Druckkopf 38 am Körper 30 mittels des Sensors 37 erlaubt mit Hilfe der Steuereinheit 36 ein kontrolliertes Nachführen des Applikationskopfes 12 entlang der Kontur des zu bandagierenden Körpers 30. Das bedeutet im einzelnen: eine translatorische Bewegung des Applikationskopfes 12 in Z-Richtung um die geradflächigen 58, konkaven 60 und konvexen 62 Abschnitte nachfahren zu können, sowie eine Rotation um die Y-Achse und gegebenenfalls auch noch um die X-Achse, um möglichst einen optimalen Winkel des Kraftvektors A der Anpresskraft auf die Oberfläche 42 des Körpers 30 zu erreichen. Abhängig hiervon wird auch die Aufschmelzvorrichtung 26 gegenüber dem Druckkopf 38 bewegt, um einen optimalen Eintrag der Aufschmelzenergie zu erhalten.

Mit der gezeigten Vorrichtung und dem gezeigten Verfahren können die verschiedensten Körper, wie Rotoren, Wickelköpfe für Läufer elektrischer Maschinen aber auch Druckbehälter oder Strömungsprofile verschiedenster Formen einfach und kostengünstig bandagiert werden. An der Struktur des unter der Bandage liegenden Materials lässt sich einfach erkennen, auf welche Weise die Bandage aufgebracht wurde. Die Bandage hat eine gleichbleibende Vorspannung und hohe gleichbleibende Qualität, da der zu bandagierende Körper 30 und alle für die Applikation nötigen Elemente 14, 18, 26, 28 in die Relativbewegung zueinander einbezogen werden, und so das faserverstärkte Kunststoffband 16 keiner unnötigen Torsion oder Knickbeanspruchungen ausgesetzt wird.

### Bezugszeichenliste

- 10: Vorrichtung
- 12: Applikationskopf
- 13: Gehäuseteil
- 14: Abwickeleinheit
- 16: faserverstärkte Kunststoffband
- 18: Zuführeinheit
- 20: Umlenkrollen
- 22: Bremsrollen
- 24: Antriebsrollen
- 26: Aufschmelzvorrichtung
- 28: Druckeinheit
- 30: zu bandagierender Körper
- 32: Trommel
- 34: Kraftmesser
- 35: Verbindungen

- 36: Steuereinheit
- 37: Sensor für Anpresskraft
- 38: Druckkopf
- 40: Anpressrolle
- 42: Oberfläche
- 44: Drehachse
- 46: erster Temperatursensor
- 48: Zuführhilfe
- 50: Vorwärmvorrichtung
- 52: weiterer Temperatursensor
- 54: Kühleinheit
- 56: Rotationsachse
- 58: geradflächiger Abschnitt
- 60: konkaver Abschnitt
- 62: konvexer Abschnitt
- 64: Bewegungseinheit
- 66: Roboterarm

## Patentansprüche

1. Verfahren zum Bandagieren von Körpern, insbesondere von Rotoren elektrischer Maschinen, bei dem ein faserverstärktes Kunststoffband (16) von einer Abwickeleinheit (14) abgespult und durch eine nachgeordnete Zuführeinheit (18) einer Aufschmelz- bzw. Aushärtevorrichtung (26) zugeleitet wird, mit deren Hilfe die Kunststoffmatrix des Bandes (16) aufgeschmolzen bzw. ausgehärtet wird, und weiter einer Druckeinheit (28) zugeführt wird, von welcher das faserverstärkte Kunststoffband (16) mit der aufgeschmolzenen bzw. sich aushärtenden Matrix an den zu bandagierenden Körper (30) angepresst wird, wobei der zu bandagierende Körper (30) und die Druckeinheit (28) relativ zueinander bewegt werden, **dadurch gekennzeichnet, dass** während des Bandagierens die Abwikkeleinheit (14), die Zuführeinheit (18) und dieAufschmelz- bzw. Aushärtevorrichtung (26) zusammen mit der Druckeinheit (28) in die Relativbewegung gegenüber dem zu bandagierenden Körper (30) einbezogen werden, so dass das faserverstärkte Kunststoffband (16) von der Abwickeleinheit (14) bis zum Auftreffen auf dem zu bandagierenden Körper (30) immer eine optimale Position einnimmt.

2. Verfahren nach Anspruch 1, **dadurch gekennzeichnet, dass** der zu bandagierende Körper (30) mit seiner Oberfläche (42) rotierend und/oder linear an der Druckeinheit (28) vorbeibewegt wird und/oder dass die Abwickeleinheit (14), die Zuführeinheit (18), die Aufschmelz- bzw. Aushärtevorrichtung (26) und die Druckeinheit (28) rotierend und/oder linear an der Oberfläche (42) des zu bandagierenden Körpers (30) vorbeibewegt werden..

3. Verfahren nach Anspruch 1 oder 2, **dadurch gekennzeichnet, dass** das faserverstärkte Kunststoffband (16) in der Zuführeinheit (18) vorgespannt wird und nach Durchlaufen verschiedener in der Zuführeinheit (18) angeordneter Rollen (20, 22, 24) vorzugsweise vorgewärmt wird.

4. Verfahren nach einem der Ansprüche 1 bis 3, **dadurch gekennzeichnet, dass** das Bandagieren via Sensoren für die Anpresskraft (37) der Druckeinheit (28) und/oder Sensoren für die Vorspannung (34) des faserverstärkten Kunststoffbandes (16) und/oder Bandbruchsensoren und/oder Sensoren für die Temperatur (46) des Kunststoffbandes (16) und/oder Sensoren für die Temperatur (52) des zu bandagierenden Körpers (30) überwacht wird und im Zusammenwirken mit einer Steuereinheit (36) vorzugsweise automatisch gesteuert wird.

5. Körper, insbesondere Druckbehälter und Rotoren, mit einer Bandage aus einem faserverstärkten Kunststoffband (16), **dadurch gekennzeichnet, dass** die Bandage nach einem Verfahren gemäss einem der Ansprüche 1 bis 4 hergestellt ist.

6. Vorrichtung zum Bandagieren von Körpern (30) mit faserverstärkten Kunststoffbändern (16) mit einer Abwickeleinheit (14) zum Abwickeln eines faserverstärkten Kunststoffbandes (16), einer an die Abwickeleinheit (14) anschliessenden Zuführeinheit (18), die das faserverstärkte Kunststoffband (16) einer Aufschmelz- bzw. Aushärtevorrichtung (26) zum Aufschmelzen bzw. Aushärten der Kunststoffmatrix des faserverstärkten Kunststoffbandes (16) und einer dieser Vorrichtung (26) nachgeordneten Druckeinheit (28) zuführt, wobei letztere zum Andrücken des faserverstärkten Kunststoffbandes (16) an den zu bandagierenden Körper (30) dient, **dadurch gekennzeichnet, dass** die Abwickeleinheit (14), die Zuführeinheit (18), die Aufschmelz- bzw. Aushärtevorrichtung (26) und die Druckeinheit (28) in einem Applikationskopf (12) örtlich zusammengefasst sind.

7. Vorrichtung nach Anspruch 1, **dadurch gekennzeichnet, dass** eine Bewegungseinheit (64) vorgesehen ist, die Mittel aufweist, um eine Oberfläche (42) des zu bandagierenden Körpers (30) relativ zum Druckkopf zu bewegen, wobei Mittel für eine rotierende Bewegung des Körpers (30) um eine Rotationsachse (56) und/oder Mittel für einen wenigstens annähernd geradlinigen Transport in einer Ebene an der Druckeinheit (28) vorbei vorgesehen sind.

8. Vorrichtung nach Anspruch 6 oder 7, **dadurch gekennzeichnet, dass** der Applikationskopf (12) und der zu bandagierende Körper (30) in einem kartesischen Koordinatensystem in x-Richtung und/oder in y-Richtung und/oder in z-Richtung translatorisch, relativ zueinander bewegbar sind.

9. Vorrichtung nach einem der Ansprüche 6 bis 8, **dadurch gekennzeichnet, dass** der Applikationskopf (12) und/oder die Bewegungseinheit (64) in einem kartesischen Koordinatensystem um die x-Achse und/oder die y-Achse und/oder die z-Achse drehbar ist.

10. Vorrichtung nach einem der Ansprüche 6 bis 9, **dadurch gekennzeichnet, dass** der Applikationskopf (12) und/oder die Bewegungseinheit (64) an einem Roboterarm (66) befestigt ist.

11. Vorrichtung nach einem der Ansprüche 6 bis 10, **dadurch gekennzeichnet, dass** die Druckeinheit (28) im Applikationskopf (12) einen auswechselbaren Druckkopf (38) aufweist.

12. Vorrichtung nach Anspruch 11, **dadurch gekennzeichnet, dass** als Druckkopf (38) austauschbare Anpressrollen (40) verschiedenen Durchmessers vorgesehen sind, wobei die Drehachse (44) der eingesetzten Anpressrolle (40) wenigstens annähernd senkrecht zum Kraftvektor (A) der aufzubringenden Anpresskraft angeordnet werden kann und/oder die Anpresskraft in ihrer Stärke einstellbar ist.

13. Vorrichtung nach einem der Ansprüche 6 bis 12, **dadurch gekennzeichnet, dass** Mittel zum Vorspannen des faserverstärkten Kunststoffbandes (16) vorgesehen sind, die vorzugsweise via ein Steuereinheit (36) abhängig von einer ermittelten tatsächlichen Vorspannung, einstellbar sind.

14. Vorrichtung nach Anspruch 13, **dadurch gekennzeichnet, dass** in der Zuführeinheit (18) zum Vorspannen wenigstens eine, vorzugsweise magnetisch, bremsbare Rolle (22) vorgesehen ist.

15. Vorrichtung nach einem der Ansprüche 6 bis 14, **dadurch gekennzeichnet, dass** die Aufschmelz- bzw. Aushärtevorrichtung (26) gegenüber dem Druckkopf (38) beweglich im Applikationskopf (12) angeordnet ist und vorzugsweise ein Heizelement und/oder eine UV-Lampe ist.

16. Vorrichtung nach einem der Ansprüche 6 bis 15, **dadurch gekennzeichnet, dass** vor der Aufschmelz- bzw. Aushärtevorrichtung (26) eine Vorwärmvorrichtung (50) vorgesehen ist.

17. Vorrichtung nach einem der Ansprüche 6 bis 16, **dadurch gekennzeichnet, dass** zur Prozessüberwachung im Applikationskopf (12) Sensoren für die Anpresskraft (37) der Druckeinheit (28) und/oder Sensoren für die Vorspannung (34) des faserverstärkten Kunststoffbandes (16) und/oder Bandbruchsensoren und/oder Sensoren für die Temperatur (46) des Kunststoffbandes (16) und/oder Sensoren für die Temperatur (52) des zu bandagierenden Körpers (30) vorgesehen sind.
